Europäisches Patentamt

(19) European Patent Office

Office européen des brevets

(11) Publication number : **0 496 545 A2**

(12) **EUROPEAN PATENT APPLICATION**

(21) Application number : 92300425.3

(22) Date of filing : 17.01.92

(51) Int. Cl.⁵ : **B29C 67/14**

(30) Priority : **22.01.91 US 644972**

(43) Date of publication of application :
**29.07.92 Bulletin 92/31**

(84) Designated Contracting States :
**GB IT**

(71) Applicant : **THE STANDARD OIL COMPANY**
**200 Public Square, 7A**
**Cleveland, Ohio 44114-2375 (US)**

(72) Inventor : **Fakhari, Mahmoud John**
**7117 East Mockingbird Way**
**Anaheim Hills, CA 92807 (US)**
Inventor : **Westbrook, Bruce Lee**
**703 Western Reserve**
**Crescent Springs, KY 41017 (US)**

(74) Representative : **Crack, Richard David et al**
**BP INTERNATIONAL LIMITED Patents**
**Division Chertsey Road**
**Sunbury-on-Thames Middlesex TW16 7LN**
**(GB)**

(54) In-line fabrication of composite sheet material.

(57) A system for fabricating a sheet of composite material comprises means (26) for forming an uncured sheet of material (17) comprising a lower support film layer (16), an uncured composite material layer (18) and an upper film layer (20), means (12) for partially curing said uncured composite material layer to form a partially cured composite material layer, means (34) for conducting in-line fabrication on the partially cured material to produce a modified partially cured composite material layer (36) and means (14) for further curing said partially cured composite layer to form a sheet of composite material (46). In-line fabrication can include the addition of an auxiliary or backing layer (38). Additional in-line fabrication procedures involve the addition of a supplemental layer of uncured material or the addition of particulate matter which may be impregnated into the partially cured composite material sheeting.

Fig. 1.

## BACKGROUND OF THE INVENTION

### 1. Field of the Invention:

The present invention relates generally to systems and methods for manufacturing relatively wide sheets of continuous composite material. More particularly, the present invention relates to an improved system and method wherein various in-line fabrication procedures are carried out during the manufacturing process.

### 2. Description of Related Art:

Large sheets of composite material are used for a wide variety of purposes. These sheets of composite material are typically made from resin impregnated fibers, such as fiberglass. The sheets are available as flat panels or contoured panels which are typically used in constructing patio covers, carports, storage sheds, fences, awnings, dividers and screens, home and industrial greenhouses, wall and truck liners, cabanas, sunrooms, garage doors, and a variety of other applications. Flat and corrugated panels are also widely used as siding for recreational vehicles and vans.

Composite material panels or sheets are typically manufactured as relatively wide continuous sheets which are cut into the desired size panels after fabrication and curing. An exemplary process for such manufacture is described in United States Patent No. 3,077,000 which was issued on February 12, 1963. The basic process disclosed in this patent and utilized in the manufacture of composite material sheeting involves forming a layer of uncured composite material which is supported by a lower support film layer. A top or upper film layer is added to form an uncured sheet of material having the uncured composite material layer sandwiched between the lower support film and upper film. Curing of the composite material is accomplished by transporting the continuous sheet of material through a series of curing ovens. The sheet exits the curing ovens as a completely cured composite panel. At that time, the lower support and upper film layers are removed. The composite sheeting is then cut or otherwise fabricated into the desired panel sizes.

Although the fiberglass or other composite material panels have a wide variety of present uses, it would be desirable to increase the possible uses for these panels by adding additional design and structural features to the panels during the fabrication process. For example, it would be desirable to add additional layers to provide additional properties such as increased strength, resistance to weather and certain alterations in panel appearance. It would also be desirable to add surface treatments to the panels during fabrication, such as incorporating additional gel coats or particulate coatings. Further, it would be desirable to impregnate partially cured panels with various filler materials to alter panel properties.

In order to provide the above-described features, there is a present need to provide a fabrication system and method which includes the capability of conducting in-line fabrication of the composite material sheeting.

## SUMMARY OF THE INVENTION

In accordance with the present invention, it was discovered that the curing process of composite material sheeting may be interrupted during the production process in order to conduct in-line fabrication. At approximately the mid-point of the curing process, it was discovered that the upper film layer can be removed from the underlying partially cured composite material layer without damage. The underlying partially cured composite material layer is in a tacky condition. This tacky condition is well-suited for in-line fabrication operations including the application of various backing, support, or protective layers, the application of additional gel coats or other resin layers and the application of particulate fillers which may be impregnated into the partially cured composite material layer.

The system for fabricating sheets of composite material in accordance with the present invention includes apparatus for forming an uncured sheet of material which includes a lower support film layer, an uncured composite material layer and an upper film layer. The uncured sheet of material is transported through an initial set of curing ovens to partially cure the uncured composite material to form a partially cured composite material layer. As a feature of the present invention, in-line fabrication of the partially cured composite material layer is conducted as the sheet continually leaves the first set of curing ovens. The in-line fabrication step produces a modified partially cured composite material layer. This modified layer is further cured by transport through a second set of curing ovens to form the final sheet of composite material from which the upper and/or lower support films are removed.

As a feature of the present invention, the in-line fabrication step involves removing the upper film layer from the partially cured composite material layer and applying an auxiliary layer to the partially cured composite material in place of the upper film layer. It was discovered that the partially cured composite material remains sufficiently tacky so that the auxiliary layer may be bonded directly to the partially cured material. As another feature of the present invention, the in-line fabrication involves removing the upper film layer from the partially cured composite material and then applying a layer of uncured resin material. The uncured resin material can be in the form of a gel coat or other coating or curable layer. The upper film layer is then reapplied and the resulting modified partially cured composite material is cured to completion.

An additional in-line fabrication feature provided in accordance with the present invention involves removing the upper film layer and applying particulate matter to the sheeting. The particles may be impregnated into the partially cured material followed by curing to completion in the second set of curing ovens. This feature allows the incorporation of a wide variety of particulate fillers and/or particulate surface treatments to the partially cured sheeting.

The above-described and many other features and attendant advantages of the present invention will become better understood by reference to the following detailed description when taken in conjunction with the accompanying drawings.

## BRIEF DESCRIPTION OF THE DRAWINGS

FIG. 1 is a partially schematic elevational view of a first preferred exemplary embodiment of a composite material sheeting fabrication system in accordance with the present invention.

FIG. 2 is a partial sectional view of the sheeting material taken in the 2-2 plane of FIG. 1 showing the material during initial curing.

FIG. 3 is a partial sectional view of the sheeting taken in the 3-3 plane of FIG. 1 showing the sheeting during the in-line fabrication process.

FIG. 4 is a partial sectional view of the final composite material sheeting taken in the 4-4 plane of FIG. 1.

FIG. 5 is a partially schematic elevational view of a second preferred exemplary embodiment of a composite material sheeting fabrication system in accordance with the present invention.

FIG. 6 is a partial sectional view of the sheeting of FIG. 5 taken in the 6-6 plane showing the final sheeting as it exits the fabrication system.

FIG. 7 is a partially schematic elevational view of a third preferred exemplary embodiment of a fabrication system in accordance with the present invention.

FIG. 8 is a partial sectional view of the composite material sheeting of FIG. 7 taken in the 8-8 plane showing the sheeting during the in-line fabrication process.

FIG. 9 is a partial sectional view of the sheeting of FIG. 7 taken in the 9-9 plane showing the final composite material sheeting as it exits the fabrication system.

## DETAILED DESCRIPTION OF THE INVENTION

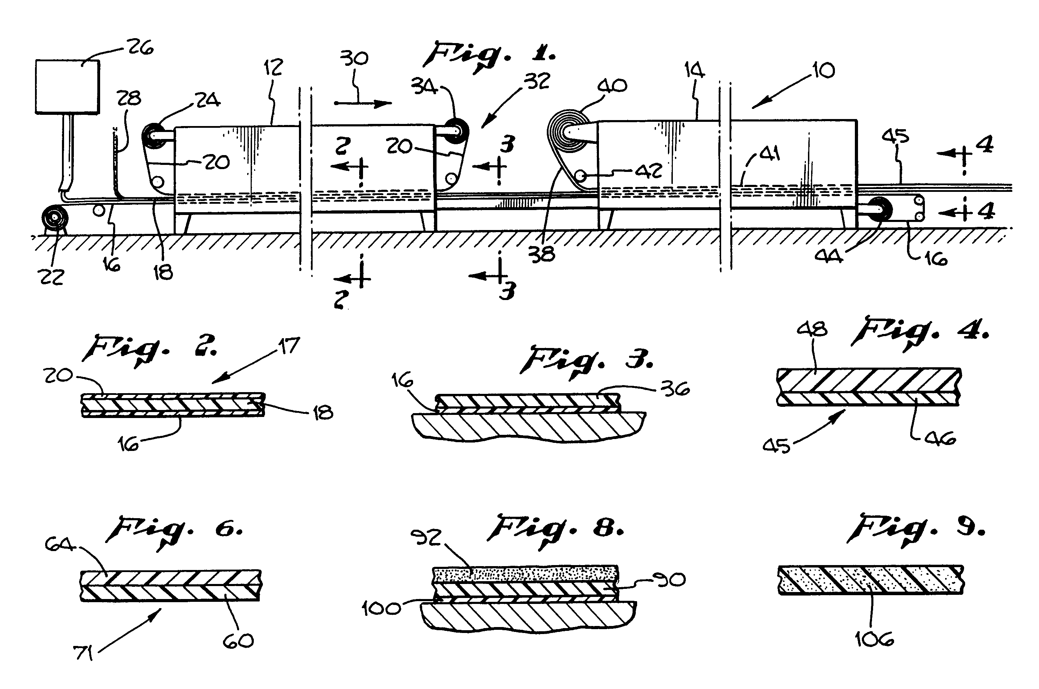

A first preferred exemplary system in accordance with the present invention is shown generally at 10 in FIG. 1. The fabrication system 10 includes a first group of curing ovens 12 and a second group of curing ovens 14. The curing ovens 12 and 14 are conventional curing ovens which comprise various sections having gradually elevated temperatures. The various temperatures within curing ovens 12 and 14 are maintained at levels required for curing of the particular resin being processed. The following description of the invention will involve a process for fabricating composite materials utilizing polyester resin. It will be understood by those skilled in the art that the system may also be used in the curing and fabrication of composite materials based on other resins. The same is true for the various types of fiber materials used in the composite materials. The present detailed description will be limited to a system wherein chopped glass fibers are used in combination with the polyester resin to form fiberglass panels. Other filaments or fibers, such as graphite, boron or ceramic fibers may also be used.

The initial formation of the uncured sheet of material is shown at the left-hand portion of FIG. 1. The uncured sheet of material 17 includes a lower support film layer 16, uncured composite material layer 18 and an upper film layer 20. The lower film layer 16 and upper film layer 20 are continually unwound from reels 22 and 24 respectively. The polyester resin is applied onto lower support film layer 16 from resin reservoir 26. Chopped glass fibers are placed onto the lower support film layer 16 after application of the resin. The chopped glass fibers are applied to the lower support film layer 16 as a pre-formed matting 28. Pre-formed woven fiber matting may also be used if desired.

The uncured sheet of material enters the first set of curing ovens moving in the direction shown by arrow 30. For fiberglass sheeting, the first curing ovens 12 will have gradually increasing temperatures from approximately 180°F to 215°F. The temperature of the first curing ovens 12 as well as the rate at which the uncured sheet of material 17 travels through the ovens 12 will be varied depending upon a number of parameters. For example, thicker layers of resin may generate more heat during the curing process due to the inherent exothermic nature of the curing process. As a result, thicker uncured sheets of material 17 may be moved at a different rate through the curing ovens 12 than thinner pieces of material having a much lower exotherm.

The curing time and temperature within the curing ovens 12 must be regulated so that the composite material layer leaving ovens 12 is only partially cured. Partial curing means that the resin remains tacky and is still in a semi-solid stage. The upper limit of temperature in curing ovens 12 to insure that the composite material layer is only partially cured is around 215°F for sheeting material which is on the order of from 1/8 to 1/4 inch thick.

The location in the system where in-line fabrication takes place is the mid-point between the two ovens 12 and 14 which is shown in FIG. 1 generally at 32. As part of the in-line fabrication process, the upper film layer 20 is removed and rolled onto take-up reel 34. As shown in FIG. 3, removal of the upper film layer 20 leaves an uncovered partially cured composite material layer 36 which is still supported by the lower support film layer 16. The partially cured composite material layer 36 must not only be tacky as discussed above, but must also be sufficiently cured so that the upper film layer 20 can be removed without adversely affecting the partially cured composite material layer 36. This condition can be easily established by setting up the temperature gradient in the curing oven 12 as discussed above and by varying the curing time to achieve the desired combination of resin tackiness and upper film layer removal. For fiberglass systems, it is preferred that the temperature of the sheeting at the mid point 32 is between about 215°F and 240°F.

After the upper film layer 20 has been removed, a backing or auxiliary layer 38 is applied to the partially cured composite material layer 36. The backing layer 38 is housed on reel 40 with roller 42 being provided to press the backing layer 38 into contact with the partially cured composite material layer 36. The backing layer 38 can be composed of a variety of different materials intended to add different characteristics to the sheeting materia. For example, the backing or auxiliary layer 38 can be a fibrous material designed to provide additional support. The auxiliary material 38 can also be a layer such as mylar or other light reflective material. Other suitable auxiliary or backing layers 38 include non-woven or woven veils and fabrics.

After application of the backing layer 38, the modified partially cured composite material layer 41 is then passed through the second curing ovens 14 for final curing. For fiberglass sheeting, the temperatures in the second curing ovens 14 should gradually rise from about 240°F to about 300°F. Again, the actual temperatures within the ovens 14 and the curing time will vary depending upon the thickness of the resin layer and other factors. The particular temperatures and curing times are selected to provide complete curing of the polyester resin. The lower support film layer 16 is removed from the completely cured sheet of composite material and taken up by reel 44. The resulting sheet of composite material 45 as shown in FIG. 4 includes a completely cured composite material layer 46 on which is securely bonded an auxiliary or backing layer 48.

A second preferred exemplary embodiment of a system in accordance with the present invention is shown generally at 50 in FIG. 5. The system 50 includes the same means for forming an uncured sheet of material as described in the system of FIG. 1. The second system 50 also includes first and second curing ovens 52 and 54 respectively. The system 50 is operated under the same basic curing temperatures and times as the first exemplary system. The principle difference between the first exemplary system 10 and the second exemplary system 50 is the particular in-line fabrication process which is carried out at the system mid-point 56.

The in-line fabrication in the second preferred exemplary system 50 also involves removing the upper film layer 58 from the partially cured composite material layer 60. As was the case in the first system the partially cured composite layer 60 is supported by a lower support film layer 62. A layer of uncured material 64 is applied to the top of the partially cured composite layer 60. The applicator device and reservoir for the additional uncured material is shown schematically at 66. The uncured material can be selected from a variety of different compounds including gel coats, paints, and other curable materials. The method of applying the curable layer 64 can be by simple flow application as shown in FIG. 5 or by spraying or other suitable means. The additional uncured material layer 64 may include a variety of additives, such as UV absorbers or other additives or fillers.

Due to the various tracking devices and support rollers required to transport the sheeting material through the curing ovens, it is desirable to place another upper film layer 68 on top of the uncured material 64. This film layer 68 is unwound from reel 70 and guided into position by roller or other suitable apparatus 72. The modified partially cured composite material layer 74 is then passed through the second set of curing ovens 54 to complete the curing process.

The upper film 68 and lower film 62 are removed from the completely cured sheeting 71 as it exits the curing ovens 54. The support films 62 and 68 are taken up by take-up reels 76 and 78 respectively. The completely cured sheeting 71 exits the system as a lamination including a cured supplemental layer 64 bonded to an integral with the underlying cured composite material layer 60.

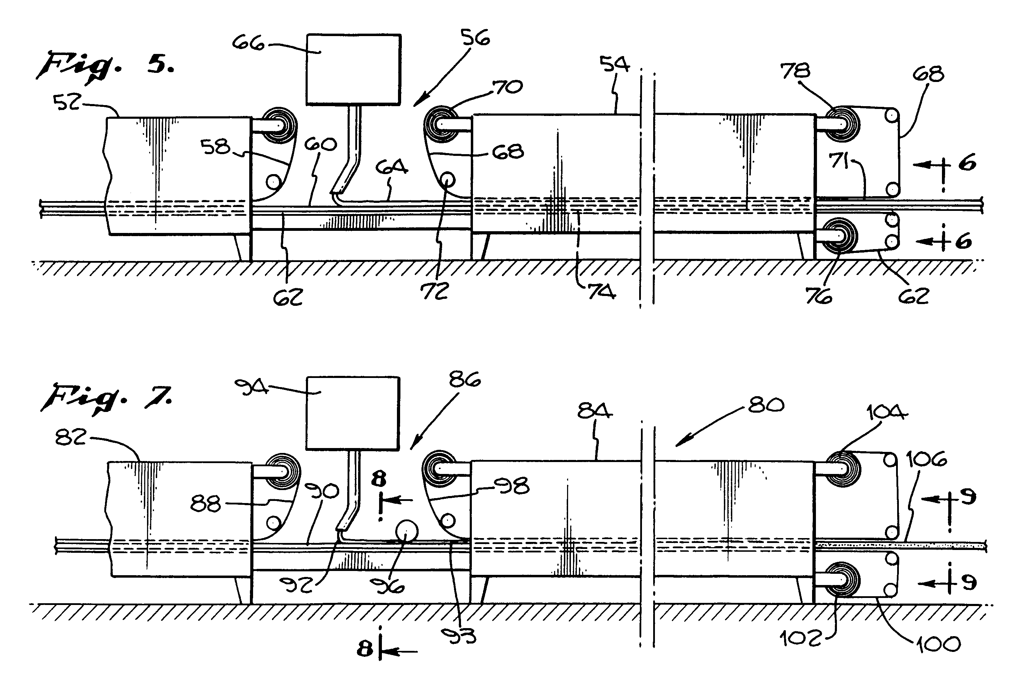

A third preferred exemplary embodiment in accordance with the present invention is shown generally at 80 in FIG. 7. This system is basically the same as the two previously described systems except for the use of a different in-line fabrication process. The system also includes a first set of curing ovens 82, second curing ovens 84 and a mid-point 86. The upper film layer 88 is removed from the partially cured composite material layer 90 just prior to application of a layer of particulate material 92. The particulate layer 92 is applied by a suitable device as shown schematically at 94. The particulate material may be used as a surface coating or it may be impregnated into the partially cured composite material layer by roller 96. The particulate material 92 can be any of the well known filler or surface treatment particles used in conjunction with composite materials. For example, particles such as silica, feldspar, glass bubbles, etc. may be used.

After application of the particulate material layer 92, an upper film layer 98 is then applied to the top of the modified partially cured composite material 93. The partially cured modified sheeting is then passed through ovens 84 for complete curing. As the sheeting exits curing ovens 84, the lower support film layer 100 and upper film layer 98 are removed and wound on uptake reels 102 and 104 respectively. The sheeting which exits the curing ovens is a completely cured panel 106 which includes the particulate matter 92 impregnated therein (see Fig. 9).

Having thus described exemplary embodiments of the present invention, it should be noted by those skilled in the art that the within disclosures are exemplary only and that various other alternatives, adaptations and modifications may be made within the scope of the present invention. Thus, by way of example and not of limitation, if desired more than one in-line fabrication procedure may be carried out in a given system. For example, a laminated structure may be fabricated wherein the in-line fabrication step includes both the addition of a fiber auxiliary layer which is then impregnated with a suitable resin.

Accordingly, the present invention is not limited to the specific embodiments as illustrated herein, but is only limited by the following claims.

## Claims

1. A system for fabricating a sheet of composite material comprising:

   means for forming an uncured sheet of material comprising a lower support film layer, an uncured composite material layer and an upper film layer;

   means for partially curing said uncured composite material layer to form a partially cured composite material layer;

   means for conducting in-line fabrication of said partially cured composite material layer to produce a modified partially cured composite material layer; and

   means for further curing of said modified partially cured composite material layer to form a sheet of composite material.

2. A system for fabricating a sheet of composite material according to claim 1 wherein said means for conducting in-line fabrication comprises:

   means for removing said upper film layer from said partially cured composite material layer; and

   means for applying an auxiliary layer to said partially cured composite material in place of said upper film layer to form said modified partially cured composite material layer.

3. A system for fabricating a sheet of composite material according to claim 1 wherein said means for conducting in-line fabrication comprises:

   means for removing said upper film layer from said partially cured composite material layer;

   means for applying a layer of uncured material to said partially cured composite material layer to produce said modified partially cured composite material layer; and

   means for applying an upper film layer on top of said layer of uncured material.

4. A system for fabricating a sheet of composite material according to claim 1 wherein said means for conducting in-line fabrication comprises:

   means for removing said upper film layer from said partially cured composite material layer;

   means for impregnating said partially cured composite material with particulate material to produce said modified partially cured composite material layer; and

   means for applying an upper film layer on top of said impregnated particulate material.

5. A system for fabricating a sheet of composite material according to claim 1 which further includes means for removing said lower support film layer or said upper film layer after said modified partially cured composite material layer is completely cured.

6. A system for fabricating a sheet of composite material according to claim 2 which further includes means for removing said lower support film layer after said modified partially cured composite material layer is completely cured.

7. A system for fabricating a sheet of composite material according to claim 3 which further includes means for removing said lower support film layer and said upper film layer after said modified partially cured composite material layer is completely cured.

8. A system for fabricating a sheet of composite material according to claim 4 which further includes means for removing said lower support film layer and said upper film layer after said modified partially cured composite material layer is completely cured.

9. A system for fabricating a sheet of composite material according to claim 1 wherein said means for forming an uncured sheet of material includes:

   means for applying catalyzed resin onto the top of said lower support film to form a layer of resin; and

means for forming a mat of chopped fibers in said layer of resin to form said uncured composite material layer.

10. A system for fabricating a sheet of composite material according to claim 9 wherein said means for applying catalyzed resin onto said lower support film includes a reservoir of polyester resin in which said resin is stored prior to application onto said lower support film.

11. A method for fabricating a sheet of composite material comprising the steps of:

forming an uncured sheet of material comprising a lower support film layer, an uncured composite material layer and an upper film layer;

partially curing said uncured composite material layer to form a partially cured composite material layer;

conducting in-line fabrication of said partially cured composite material layer to produce a modified partially cured composite material layer; and

curing said modified partially cured composite material layer to form a sheet of composite material.

12. A method for fabricating a sheet of composite material according to claim 11 wherein said step of conducting in-line fabrication comprises:

removing the upper film layer from the partially cured composite material layer; and

applying an auxiliary layer to said partially cured composite material in place of said upper film layer to form said modified partially cured composite material layer.

13. A method for fabricating a sheet of composite material according to claim 12 wherein said auxiliary layer is a support layer.

14. A method for fabricating a sheet of composite material according to claim 11 wherein said step of conducting in-line fabrication comprises:

removing the upper film layer from the partially cured composite material layer;

applying a layer of uncured material to the partially cured composite material layer to produce said modified partially cured composite material layer; and

applying an upper film layer on top of said layer of uncured material.

15. A method for fabricating a sheet of composite material according to claim 14 wherein said uncured material is a gel coat.

16. A method for fabricating a sheet of composite material according to claim 11 wherein said step of conducting in-line fabrication comprises:

removing the upper film layer from the partially cured composite material layer;

impregnating said partially cured composite material with particulate material to produce said modified partially cured composite material layer; and

applying an upper film layer on top of said impregnated particulate material.

17. A method according to claim 11 wherein said uncured composite material layer comprises catalyzed polyester resin and chopped glass fibers.

18. A method according to claim 17 wherein said step of conducting in-line fabrication is conducted when said partially cured composite material layer is at a temperature of between about 215°F and 240°F.

Fig. 1.

Fig. 2.

Fig. 3.

Fig. 4.

Fig. 6.

Fig. 8.

Fig. 9.

Fig. 5.

Fig. 7.